# EUROPEAN PATENT SPECIFICATION

(11) **EP 3 386 173 B1**
(45) Date of publication and mention of the grant of the patent: **08.01.2020**
(21) Application number: 17165361.1
(22) Date of filing: 06.04.2017
(51) Int. Cl.: H04M 1/02, G06F 1/16

(54) **ELECTRONIC DEVICE WITH SLIDABLE CONNECTOR PORT**
ELEKTRONISCHE VORRICHTUNG MIT VERSCHIEBBAREM VERBINDERANSCHLUSS
DISPOSITIF ÉLECTRONIQUE DOTÉ D'UN PORT DE CONNECTEUR COULISSANT

(43) Date of publication of application: 10.10.2018
(73) Proprietor: Vestel Elektronik Sanayi ve Ticaret A.S., 45030 Manisa (TR); Özyegin Üniversitesi, 34794 Çekmeköy/ Istanbul (TR)
(72) Inventor: MEMISOGLU, Gorkem, 45030 Manisa (TR); GULBAHAR, Burhan, 34794 Çekmeköy/Istanbul (TR)
(74) Representative: Ascherl, Andreas

(56) References cited:
- EP-A1- 2 093 979
- US-A1- 2011 228 495
- US-B1- 6 439 900

## Description

The present invention refers according to claim 1 to an electronic device.

### Background of the invention

Document CN106208232A discloses a mobile power source which is portable and securely placed, and relates to the field of digital product accessories. The device according to CN106208232A includes a mobile power source, an end side interface, an annular side interface, a charging interface, an end side indicator lamp and an annular side indicator lamp. The end side interface is located on both ends of the mobile power source, and at least three of the ring side interfaces are arranged at the side of the mobile power source and the side indicator light are located on the upper side of the end side interface. The side indicator light is located on the upper side of the ring side interface. According to CN106208232A the respective indicator lights are installed on each external transmission interface of the mobile power supply. If the mobile phone charging cable connector is completely connected with the external power transmission interface of the mobile power supply, the indicator light will be bright and vice versa. The bottom side of the cylindrical mobile power supply is arranged in a flat structure, and the mobile power source can be firmly placed.

US 2011/228495 A1 describes an electronic device with a motorised sliding mechanism for a plurality of USB ports.

EP 2 093 979 A1 discloses a sliding cover for protecting ports of a mobile communication device. US 6 439 900 B1 describes a communication module for an electronic device with a movable electrically conductive interface.

There are many types of charging or earphone (headset) jacks that are placed on cell phones, tablets, televisions, smart walls etc.. However, none of them supports further needs of the user.

Thus, charging or headphone connector jacks are limited by a few designs for bottom and top part of the phone, respectively. Due to the classical and deep-seated designs, cell phone utilization while charging can be frustrating and this situation can be result with the cutting off the cable (or ports (jack box) can be unwind) in time.

### Object of the present invention

It is the object of the present invention to provide an electronic device with improved connector properties.

### Summary of the invention

The before mentioned object is solved by an electronic device according to claim 1. The electronic device according to the present invention preferably comprises at least a housing, a processor unit arranged inside said housing, a physical port for inputting electric energy for operating said processor unit and/or for outputting of acoustic signals or acoustic data, wherein the physical port is coupled via a sliding means to the housing, wherein the sliding means provides a sliding path for repositioning of the physical port with respect to the housing, wherein the sliding path comprises at least a first section and a second section wherein the first section and second section are connected to each other, wherein the physical port is slidable from the first section to the second section and/or from the second section to the first section, wherein the first section and the second section are inclined to each other in an angle of 90º for changing the orientation of the physical port. The processor unit is preferably a processor unit for operating a cell phone or smart phone or tablet PC or smart watch or e-book reader, etc.

This invention is beneficial since preferably at the bottom side of the phone, tablet, etc., a power jack is arranged which has moving ability to the margent side by using of the short line between the bottom and the margent. However, at the up side of the phone, tablet, etc., earphone jack has moving ability to the margent side by using of the short line between the up and the margent of the device.

Thus, there is preferably a movable jack port for power and/or earphone of cellphone, tablet, TV, charge cable, connector, etc.

Further preferred embodiments of the present invention are subject-matter of the specification parts and/or of the dependent claims.

According to a preferred embodiment of the present invention a movable or flexible cover member is provided, wherein the cover member covers the sliding path. Said cover member preferably seals the housing to prevent access of dust and/or water into the inside of the housing. This embodiment is beneficial since due to the cover member the inside of the housing is protected respectively kept clean.

The sliding path comprises at least a first section and a second section, wherein the first section and second section are connected to each other, wherein the physical port is slidable from the first section to the second section and/or from the second section to the first section, wherein the first section and the second section are inclined to each other, in particularly inclined in an angle between 10° and 170°, in particularly in an angle between 45° and 135°, in particularly in an angle between 80° and 100° or in an angle of 90°. This is beneficial since the port orientation can be changed without the need of changing the position of the electronic device. Thus, the electronic device is more flexible compared to know devices.

A signal and/or energy connection for connecting the physical port with the processor unit, in particular a battery or acoustic data/signal processing means, is provided according to a further preferred embodiment of the present invention. The signal and/or energy connection is preferably part of the sliding means, wherein the physical port is electronically coupled with the signal and/or energy connection for exchanging signals and/or energy. The signal and/or energy connection is highly preferably arranged in a static, in particular printed, manner. This embodiment is beneficial since no cables are necessary for directly connecting the port and a battery or the port and an acoustic data/signal processing means.

The sliding path extends according to a further preferred embodiment into the inside of the housing. Sliding directions of the physical port inside said housing are defining a siding plane, wherein the physical port extends into the sliding path inside the housing, wherein battery components, processor components and/or screen components are arranged on at least one side of the sliding path between the sliding plane and the housing, wherein the battery components, processor components and/or screen components are at least partially overlaying the sliding path.

A detection means for detecting the position of the physical port is provided according to a further preferred embodiment of the present invention, wherein signals and/or data representing the position of the physical port is generated and outputted by the detection means in dependency of the actual position of the physical port. This embodiment is beneficial since features like screen orientation can be adapted in dependency of port orientation.

According to a further embodiment of the present invention a lock mechanism is provided for locking the physical port in place. The locking mechanism preferably comprises an electronic actuator, wherein the electronic actuator is operated in dependency of software commands. This embodiment is beneficial since unintended sliding of one or multiple ports can be avoided.

An electric motor for sliding the physical port along the sliding path is provided according to a further preferred embodiment of the present invention, wherein the electric motor is preferably operated via software executed on said electronic device. This embodiment is beneficial since it causes more comfort for the user.

The electronic device is according to a further preferred embodiment of the present invention a smartphone, tablet PC, laptop, television, digital signage unit, e-book reader, videowall, Smart Board, smart watch, head-mounted display.

A second physical port for inputting electric energy for operating said processor unit and/or for outputting of acoustic signals or acoustic data is provided according to a further preferred embodiment of the present invention, wherein the second physical port is coupled via a second sliding means to the housing, wherein the second sliding means provides a second sliding path for repositioning of the second physical port with respect to the housing. This embodiment is beneficial since multiple ports can be modified to better fit to user needs.

According to a further preferred embodiment the physical port is a power jack and/or an ear phone jack.

Further benefits, goals and features of the present invention will be described by the following specification of the attached figure, in which exemplarily components of the invention are illustrated. Components of the device and methods according to the invention, which match at least essentially with respect to their function can be marked with the same reference sign, wherein such components do not have to be marked or described multiple times with respect to said figure. In the following the invention is just exemplarily described with respect to the attached figure.

### Brief Description of the Drawings

Fig. 1 shows exemplarily a first illustration of an electronic device according to the present invention,
Fig. 2 shows a more detailed illustration of an example of a sliding path of a device according to the present invention, and
Fig. 3 shows a further perspective of device shown in figures 1 and 2.

### Detailed Description of the Drawings

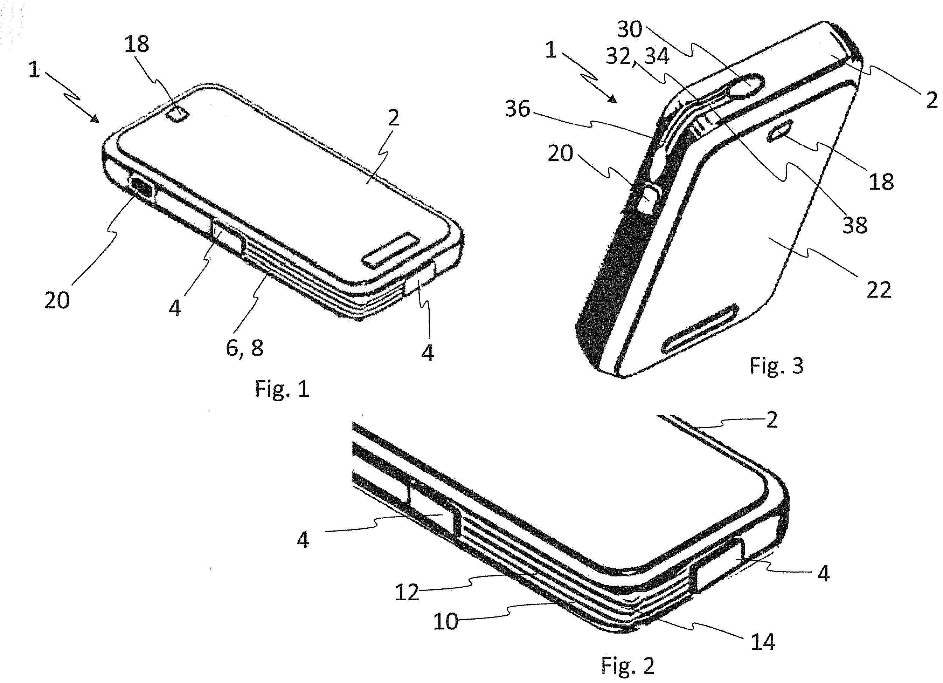

Fig. 1 shows an electronic device 1 according to the present invention. The shown electronic device 1 is preferably a smartphone. The electronic device 1 comprises a housing 2, wherein electronic components are arranged inside said housing 2. Furthermore, a light source 18 or a camera 18 might be part of the housing 2. It is further conceivable that one or more buttons 20, in particularly for adjusting system parameters like loudness or camera, are present. However, it is also possible that the electronic device comprises as input means for inputting commands a touch screen only.

Reference number 6 indicates a sliding means for repositioning of port 4. Port 4 is preferably a power jack. It is conceivable that sliding means 6 forms a sliding path 8 that extends only in one direction. In the shown example sliding path 8 extends into two directions. It is further conceivable that reference number 4 indicates multiple ports, in particularly for connecting multiple external devices at the same time, such a combined port or the individual ports are movable along the same sliding path 6.

Fig. 2 shows a larger illustration of an electronic device 1 according to the present invention. The sliding means 6 comprise at least a first section 12 and a second section 14, wherein a port can be moved along both sections, since both sections 12, 14 are forming said sliding path 8. The second section 14 is preferably arranged along a lower end of the electronic device 1.

Fig. 3 shows a further example of the present invention. According to this illustration an additional or alternative sliding means 6, 34 is provided. Said sliding means 34 preferably comprises a first section 36 and a second section 38. The second section 38 preferably extends along the upper end of the electronic device 1 respectively housing 2. The first section 36 and the second section 38 are preferably connected to each other, in particularly forming the sliding path 34. Reference number 30 indicates physical port, in particularly a second physical port like a head phone jack.

According to a preferred embodiment the electronic device 1 comprises the first sliding means 6 and the second sliding means 34 for modifying the position of a first physical port and a second port.

Thus, the present invention discloses an electronic device 1, which comprises at least a housing 2, a processor unit arranged inside said housing 2, a physical port 4 for inputting electric energy for operating said processor unit and/or for outputting of acoustic signals or acoustic data, wherein the physical port 4 is coupled via a sliding means 6 to the housing 2, wherein the sliding means 6 provides a sliding path 8 for repositioning of the physical port 4 with respect to the housing 2.

### List of reference numbers

- 1: electronic device
- 2: housing
- 4: physical port
- 6: sliding means
- 8: sliding path
- 10: cover member
- 12: first section
- 14: second section
- 16: sliding plane
- 18: camera / light
- 20: button
- 22: backside
- 30: second physical port
- 32: second sliding means
- 34: second sliding path
- 36: first section of second sliding path
- 38: second section of second sliding path

## Claims

1. Electronic device (1), at least comprising
a housing (2),
a processor unit arranged inside said housing (2),
a physical port (4) for inputting electric energy for operating said processor unit and/or for outputting of acoustic signals or acoustic data,
wherein the physical port (4) is coupled via a sliding means (6) to the housing (2),
wherein the sliding means (6) provides a sliding path (8) for repositioning of the physical port (4) with respect to the housing (2),
wherein the sliding path (8) comprises at least a first section (12) and a second section (14), wherein the first section (12) and second section (14) are connected to each other, wherein the physical port (4) is slidable from the first section (12) to the second section (12) and/or from the second section (14) to the first section (12),
wherein the first section (12) and the second section (14) are inclined to each other in an angle of 90°, for changing the orientation of the physical port.

2. Electronic device according to claim 1, **characterized in that**
a movable or flexible cover member (10) is provided,
wherein the cover member (10) covers the sliding path (8).

3. Electronic device according to any of the preceding claims, **characterized in that**
a signal and/or energy connection for connecting the physical port (4) with the processor unit, in particular a battery or acoustic data/signal processing means, is provided, wherein the signal and/or energy connection is part of the sliding means (6), wherein the physical port (4) is electronically coupled with the signal and/or energy connection for exchanging signals and/or energy.

4. Electronic device according to claim 1, **characterized in that**
the signal and/or energy connection is arranged in a static, in particular printed, manner.

5. Electronic device according to any of the preceding claims, **characterized in that**
the sliding path (8) extends into the inside of the housing (2),
wherein sliding directions of the physical port (4) inside said housing (2) are defining a sliding plane, wherein the physical port (4) extends into the sliding path (8) inside the housing (2),
wherein battery components, processor components and/or screen components are arranged on at least one side of the sliding path (8) between the sliding plane and the housing, wherein the battery components, processor components and/or screen components are at least partially overlaying the sliding path (8).

6. Electronic device according to any of the preceding claims, **characterized in that**
a detection means for detecting the position of the physical port (4) is provided, wherein signals and/or data representing the position of the physical port is generated and outputted by the detection means in dependency of the actual position of the physical port (4).

7. Electronic device according to any of the preceding claims, **characterized in that**
a lock mechanism is provided for locking the physical port (4) in place.

8. Electronic device according to claim 1, **characterized in that**
wherein the locking mechanism comprises an electronic actuator, wherein the electronic actuator is operated in dependency of software commands.

9. Electronic device according to any of the preceding claims,
**characterized in that**
an electric motor for sliding the physical port (4) along the sliding path is provided, wherein the electric motor is operated via software executed on said electronic device.

10. Electronic device according to any of the preceding claims, **characterized in that**
the electronic device is a smartphone, tablet PC, laptop, television, digital signage unit, e-book reader, videowall, Smart Board, smart watch, head-mounted display.

11. Electronic device according to any of the preceding claims, **characterized in that**
the physical port (4) is a power jack.

12. Electronic device according to any of the preceding claims, **characterized in that**
the physical port (4) is an ear phone jack.

13. Electronic device according to any of the preceding claims, **characterized in that**
a second physical port (30) for inputting electric energy for operating said processor unit and/or for outputting of acoustic signals or acoustic data is provided,
wherein the second physical port (30) is coupled via a second sliding means (32) to the housing (2),
wherein the second sliding means (32) provides a second sliding path (34) for repositioning of the second physical port (30) with respect to the housing (2).

## Patentansprüche

1. Elektronische Vorrichtung (1),
mindestens umfassend
ein Gehäuse (2),
eine Prozessoreinheit, die innerhalb des Gehäuses (2) angeordnet ist,
einen physikalischen Port (4) zum Eingeben von elektrischer Energie zum Betreiben der Prozessoreinheit und/oder zum Ausgeben von akustischen Signalen oder akustischen Daten,
wobei die physikalische Port (4) über ein Gleitelement (6) mit dem Gehäuse (2) gekoppelt ist,
wobei die Gleitelemente (6) einen Gleitweg (8) zum Neuanordnen des physikalischen Ports (4) in Bezug auf das Gehäuse (2) bereitstellen,
wobei der Gleitweg (8) mindestens einen ersten Abschnitt (12) und einen zweiten Abschnitt (14) umfasst, wobei der erste Abschnitt (12) und der zweite Abschnitt (14) miteinander verbunden sind, wobei die physikalische Port (4) vom ersten Abschnitt (12) zum zweiten Abschnitt (12) und/oder vom zweiten Abschnitt (14) zum ersten Abschnitt (12) verschiebbar ist,
wobei der erste Abschnitt (12) und der zweite Abschnitt (14) in einem Winkel von 90° zueinander geneigt sind, um die Ausrichtung des physikalischen Ports zu ändern.

2. Elektronische Vorrichtung nach Anspruch 1,
**dadurch gekennzeichnet, dass**
ein bewegliches oder flexibles Abdeckelement (10) vorgesehen ist,
wobei das Abdeckelement (10) den Gleitweg (8) abdeckt.

3. Elektronische Vorrichtung nach einem der vorstehenden Ansprüche,
**dadurch gekennzeichnet, dass**
eine Signal- und/oder Energieverbindung zum Verbinden des physikalischen Ports (4) mit der Prozessoreinheit, insbesondere eine Batterie oder ein akustisches Daten-/Signalverarbeitungsmittel, vorgesehen ist, wobei die Signal- und/oder Energieverbindung Teil des Gleitelements (6) ist, wobei der physikalische Port (4) elektronisch mit der Signal- und/oder Energieverbindung zum Austausch von Signalen und/oder Energie gekoppelt ist.

4. Elektronische Vorrichtung nach Anspruch 1,
**dadurch gekennzeichnet, dass**
der Signal- und/oder Energieanschluss statisch, insbesondere gedruckt, angeordnet ist.

5. Elektronische Vorrichtung nach einem der vorstehenden Ansprüche,
**dadurch gekennzeichnet, dass**
sich der Gleitweg (8) in das Innere des Gehäuses (2) erstreckt,
wobei die Gleitrichtungen des physikalischen Ports (4) innerhalb des Gehäuses (2) eine Anschlussebene definieren,
wobei sich der physische Port (4) in den Gleitweg (8) innerhalb des Gehäuses (2) erstreckt,
wobei Batteriekomponenten, Prozessorkomponenten und/oder Bildschirmkomponenten auf mindestens einer Seite des Gleitwegs (8) zwischen der Gleitebene und dem Gehäuse angeordnet sind, wobei die Batteriekomponenten, Prozessorkomponenten und/oder Bildschirmkomponenten mindestens teilweise den Gleitweg (8) überlagern.

6. Elektronische Vorrichtung nach einem der vorstehenden Ansprüche,
**dadurch gekennzeichnet, dass**
ein Erfassungsmittel zum Erfassen der Position des physikalischen Ports (4) vorgesehen ist, wobei Signale und/oder Daten, die die Position des physikalischen Ports darstellen, erzeugt und durch das Erfassungsmittel in Abhängigkeit von der tatsächlichen Position des physikalischen Ports (4) ausgegeben werden.

7. Elektronische Vorrichtung nach einem der vorstehenden Ansprüche,
**dadurch gekennzeichnet, dass**
ein Verriegelungsmechanismus vorgesehen ist, um den physischen Port (4) an Ort und Stelle zu verriegeln.

8. Elektronische Vorrichtung nach Anspruch 1,
**dadurch gekennzeichnet, dass**
wobei der Verriegelungsmechanismus ein elektronisches Stellglied umfasst, wobei das elektronische Stellglied in Abhängigkeit von Softwarebefehlen betrieben wird.

9. Elektronische Vorrichtung nach einem der vorstehenden Ansprüche,
**dadurch gekennzeichnet, dass**
ein Elektromotor zum Verschieben der physikalischen Öffnung (4) entlang der Gleitbahn vorgesehen ist, wobei der Elektromotor vorzugsweise über eine auf der elektronischen Vorrichtung ausgeführten Software betrieben wird.

10. Elektronische Vorrichtung nach einem der vorstehenden Ansprüche,
**dadurch gekennzeichnet, dass**
die elektronische Vorrichtung ein Smartphone, Tablet-PC, Laptop, Fernseher, Digital Signage Einheit, E-Book-Leser, Videowand, Smart Board, Smart Watch, Head Mounted Display ist.

11. Elektronische Vorrichtung nach einem der vorstehenden Ansprüche,
**dadurch gekennzeichnet, dass**
der physikalische Port (4) eine Stromanschluss ist.

12. Elektronische Vorrichtung nach einem der vorstehenden Ansprüche,
**dadurch gekennzeichnet, dass**
der physische Port (4) eine Kopfhöhreranschluss ist.

13. Elektronische Vorrichtung nach einem der vorstehenden Ansprüche,
**dadurch gekennzeichnet, dass**
ein zweiter physikalischer Port (30) zum Eingeben von elektrischer Energie zum Betreiben der Prozessoreinheit und/oder zum Ausgeben von akustischen Signalen oder akustischen Daten vorgesehen ist,
wobei der zweite physikalische Port (30) über ein zweites Gleitelement (32) mit dem Gehäuse (2) gekoppelt ist,
wobei die zweite Gleiteinrichtung (32) einen zweiten Gleitweg (34) zum Umsetzen des zweiten physikalischen Ports (30) in Bezug auf das Gehäuse (2) bereitstellt.

## Revendications

1. Dispositif électronique (1),
comprenant au moins
un boîtier (2),
une unité de processeur disposée à l'intérieur dudit boîtier (2),
un port physique (4) pour entrer de l'énergie électrique pour faire fonctionner ladite unité processeur et/ou pour émettre des signaux acoustiques ou des données acoustiques,
dans laquelle le port physique (4) est couplé au boîtier (2) par l'intermédiaire d'un moyen de glissement (6),
dans laquelle le moyen de glissement (6) fournit un chemin de glissement (8) pour repositionner le port physique (4) par rapport au boîtier (2),
dans laquelle le trajet coulissant (8) comprend au moins une première section (12) et une deuxième section (14), la première section (12) et la deuxième section (14) étant reliées l'une à l'autre, le port physique (4) pouvant glisser de la première section (12) vers la deuxième section (12) et/ou de la deuxième section (14) vers la première section (12),
dans laquelle la première section (12) et la deuxième section (14) sont inclinées l'une par rapport à l'autre dans un angle de 90° pour changer l'orientation de l'orifice physique.

2. Dispositif électronique selon la revendication 1,
**caractérisé en ce que**
un élément de recouvrement mobile ou flexible (10) est prévu,
dans laquelle l'élément de recouvrement (10) recouvre le chemin de glissement (8).

3. Dispositif électronique selon l'une quelconque des revendications de la procédure,
**caractérisé en ce que**
une liaison de signal et/ou d'énergie pour relier le port physique (4) à l'unité de traitement, en particulier une batterie ou un moyen de traitement de données/signal acoustique, est prévue, la liaison de signal et/ou d'énergie faisant partie du moyen coulissant (6), le port physique (4) étant couplé électroniquement avec la liaison de signal et/ou d'énergie pour échanger des signaux et/ou d'énergie.

4. Dispositif électronique selon la revendication 1,
**caractérisé en ce que**
la connexion de signal et/ou d'énergie est disposée de manière statique, en particulier imprimée.

5. Dispositif électronique selon l'une quelconque des revendications de la procédure,
**caractérisé en ce que**
le chemin de glissement (8) s'étend à l'intérieur du boîtier (2),
dans laquelle les directions de glissement de l'orifice physique (4) à l'intérieur dudit boîtier (2) définissent un plan de revêtement,
dans laquelle le port physique (4) s'étend dans le chemin de glissement (8) à l'intérieur du boîtier (2),
dans laquelle des composants de batterie, des composants de processeur et/ou des composants d'écran sont disposés sur au moins un côté du trajet de glissement (8) entre le plan de glissement (16) et le boîtier, les composants de batterie, les composants de processeur et/ou les composants d'écran superposant au moins partiellement le trajet de glissement (8).

6. Dispositif électronique selon l'une quelconque des revendications de la procédure,
**caractérisé en ce que**
un moyen de détection pour détecter la position du port physique (4) est prévu, dans lequel des signaux et/ou des données représentant la position du port physique sont générés et émis par le moyen de détection en fonction de la position réelle du port physique (4).

7. Dispositif électronique selon l'une quelconque des revendications de la procédure,
**caractérisé en ce que**
un mécanisme de verrouillage est prévu pour verrouiller le port physique (4) en place.

8. Dispositif électronique selon la revendication 1,
**caractérisé en ce que**
dans lequel le mécanisme de verrouillage comprend un actionneur électronique, dans lequel l'actionneur électronique est actionné en fonction de commandes logicielles.

9. Dispositif électronique selon l'une quelconque des revendications de la procédure,
**caractérisé en ce que**
un moteur électrique est prévu pour faire coulisser le port physique (4) le long du trajet de coulissement, dans lequel le moteur électrique est commandé par l'intermédiaire d'un logiciel exécuté sur ledit dispositif électronique.

10. Dispositif électronique selon l'une quelconque des revendications de la procédure,
**caractérisé en ce que**
l'appareil électronique est un smartphone, une tablette PC, un ordinateur portable, un téléviseur, une unité de signalisation numérique, un lecteur de livres électroniques, un mur vidéo, un tableau intelligent, une montre intelligente, un écran sur la tête.

11. Dispositif électronique selon l'une quelconque des revendications de la procédure,
**caractérisé en ce que**
le port physique (4) est une prise d'alimentation.

12. Dispositif électronique selon l'une quelconque des revendications de la procédure,
**caractérisé en ce que**
le port physique (4) est une prise pour écouteurs.

13. Dispositif électronique selon l'une quelconque des revendications de la procédure,
**caractérisé en ce que**
un deuxième port physique (30) est prévu pour l'entrée d'énergie électrique pour le fonctionnement de l'unité processeur et/ou pour la sortie de signaux acoustiques ou de données acoustiques,
dans laquelle le deuxième orifice physique (30) est couplé au boîtier (2) par l'intermédiaire d'un deuxième moyen de glissement (32),
dans laquelle le second moyen de glissement (32) fournit un second chemin de glissement (34) pour repositionner le second orifice physique (30) par rapport au boîtier (2).
